# EUROPEAN PATENT APPLICATION

(11) **EP 2 846 004 A1**
(43) Date of publication of application: **11.03.2015**
(21) Application number: 13183567.0
(22) Date of filing: 09.09.2013
(51) Int. Cl.: F01D 21/00, G01H 1/00

(54) **Method for monitoring the operational state of rotor blades of a turbomachine**

(71) Applicant: Siemens Aktiengesellschaft, 80333 München (DE)
(72) Inventor: Bredekamp, Adriaan Hendrik, 63065 Offenbach (DE)

(57) **Abstract**

The present invention relates to a method for monitoring the operational state of rotor blades of a turbomachine, wherein higher harmonics of the Eigen-Frequencies are measured by vibration monitoring sensors mounted on a shaft of the rotor and then phases of those measured higher harmonics are determined, wherein those phases are used as measurement variables for detecting a frequency shift due to a mass loss.

## Description

The present invention relates to a method for monitoring the operational state of rotor blades of a turbomachine according to claim 1.

In high speed turbomachines, e.g. steam or gas turbines, multiple turbine stages, each comprising a plurality of circumferentially distributed blades forming a turbine wheel, are arranged axially along a rotatable shaft. The turbine wheels rotate in response to the force of a high pressure fluid flowing axially through the machine and impinging on the blades of the wheels.

Natural resonant frequencies of the blades may coincide with or be excited by some rotational speeds and integral harmonics thereof. Blade resonances excited at multiples of the shaft rotational frequency may create stresses, which break one or more blades and cause extensive damage, thus shutting the machine down and requiring extensive repair. Other factors, like e.g. change of blade mass as a result of corrosion or erosion, also cause resonant frequencies of the blades to change with time.

Up to now, different methods for detecting such problems are known. In a first method, microwave tip clearance sensors are used to physically measure each blade as it moves past the sensor during operation. This is both very expensive and costly. A further method tries to detect the shaft imbalance that would be caused by a loss of mass on one side of the shaft. But this is not possible, when the shaft stays balanced if two blades are lost simultaneously on opposing sides of the shaft. A brief vibration might be detected at the point in time, when the blades are lost, but if the vibration stays within tolerances the operator will not stop the turbine. In the extreme case, when all the blades are lost and only an empty shaft is turning, the shaft vibrations would still be in tolerance.

It is thus an object of the present invention to provide a method for detecting frequency shifts in characteristic blade resonances of turbomachines, which may be caused by cracking, thermal gradients, material changes, deposits, corrosion and other factors and which avoids the before mentioned problems.

According to the present invention, this object is achieved with a method according to claim 1, comprising the steps of:
- measuring higher harmonics of the Eigen-Frequencies with a vibration monitoring sensors mounted on a shaft of the rotor,
- determining phases of those measured higher harmonics,
- using the phases as measurement variable for detecting a frequency shift due to a mass loss.

Here, existing sensors that are already mounted on the shaft for vibration monitoring can be used to also detect the loss of mass of the blades mounted on the shaft by using Eigen-Frequencies. These differ from the usually measured resonant frequencies by the damping or stiffness of the system in question.

The advantage of the present invention is that:
a.) a mass loss of turbine blades can be better determined, when higher harmonics are used,
b.) a phase measurement is better than an amplitude measurement, because than the Eigen-Frequency can be correctly determined, and
c.) a phase measurement is better than a amplitude measurement, because a phase can still be detected when the amplitude has already disappeared in the background noise.

A usage example would be in turbomachine protection, where a sudden loss of mass, like a blade loss, would lead to a shutdown of the machine.

In order to really measure higher harmonics it is important to change from amplitude measurements to phase based measurements, since phase can still be measured when the amplitude has already disappeared in the background noise. Also, for the correct determination of the Eigen-Frequency, phase measurements are needed since the Eigen-Frequency peak corresponds to the phase slope flex-point. The slope can be determined using Calculus and Differentiation and where the slope is equal to zero, there is also the correct Eigen-frequency. Also there is important to measure the Eigen-Frequency, because due to clamping in the system, a small difference between the Eigen-Frequency and the Resonant-Frequency exist and solely at the Eigen-Frequency the phase is zero.

A sensitivity increase can be obtained from observing higher harmonics. Thus the Eigen-Frequency must be measured correctly, due to the relationship between harmonic number and sensitivity. Thus it is preferred to measure up to the 12^{th} harmonic. Sensitivity is very important here since the more sensitive the measurement, the small the mass change that can be detected. As example, a 10% blade mass loss would for example show a 10Hz frequency shift at the 1^{st} harmonic, 12Hz at the 2^{nd} harmonic, 15Hz at the 3^{rd}, 20Hz at the 4^{th} and say 2kHz at the 11^{th} harmonic. Now, if we only have a 0.01 % mass loss, it means a 0.01 Hz frequency shift at the 1^{st} harmonic, which is difficult to detect, but still a 2Hz shift at the 11^{th} harmonic, which can still be easily detected.

## Claims

1. A method for monitoring the operational state of blades mounted on a rotor of a turbomachine, comprising the steps of:
- measuring higher harmonics of the Eigen-Frequencies with a vibration monitoring sensors mounted on a shaft of the rotor,
- determining phases of those measured higher harmonics,
- using the phases as measurement variable for detecting a frequency shift due to a mass loss.

2. Method according to claim 1,
**characterized in that**
the phase is measured for the higher harmonics up to the 12^{th} harmonic.
